# EUROPÄISCHE PATENTSCHRIFT

(11) **EP 2 297 967 B1**
(45) Veröffentlichungstag und Bekanntmachung des Hinweises auf die Patenterteilung: **30.11.2011**
(21) Anmeldenummer: 09749596.4
(22) Anmeldetag: 18.05.2009
(51) Int. Cl.: H04N 7/64, H04N 7/68, H04N 7/24, H04N 7/18, G08B 13/196

(54) **VORRICHTUNGEN UND VERFAHREN ZUM VERARBEITEN VON DATENPAKETEN EINES DATENSTROMS, SOWIE EINE VERWENDUNG DER VORRICHTUNGEN**
DEVICES AND METHOD FOR PROCESSING DATA PACKETS OF A DATA STREAM AND USE OF SAID DEVICES
DISPOSITIFS ET PROCÉDÉS DE TRAITEMENT DE PAQUETS DE DONNÉES D'UN FLUX DE DONNÉES ET UTILISATION DES DISPOSITIFS

(30) Priorität: 20.05.2008 DE 102008024255
(43) Veröffentlichungstag der Anmeldung: 23.03.2011
(73) Patentinhaber: Siemens Enterprise Communications GmbH & Co. KG, 81379 München (DE)
(72) Erfinder: BÄSE, Gero, 81739 München (DE); OERTEL, Norbert, 84032 Landshut (DE)
(74) Vertreter: Fritzsche, Thomas
(86) Internationale Anmeldenummer: PCT/EP2009/003520
(87) Internationale Veröffentlichungsnummer: WO 2009/141106

(56) Entgegenhaltungen:
- US-A- 5 550 847
- US-A- 6 104 757

## Beschreibung

Die Erfindung betrifft Vorrichtungen und Verfahren zum Verarbeiten von Datenpaketen eines Datenstroms, sowie eine Verwendung der Vorrichtungen.

In den vergangenen Jahren hat eine Anzahl an video- und bildbasierten Überwachungssystemen stetig zugenommen. Dabei können die zu übertragenden Daten drahtlos übermittelt werden, wodurch Übermittlungsfehler entstehen können. Diese Übermittlungsfehler werden beispielsweise dadurch behoben, dass fehlerhaft übertragene oder fehlende Datenpakete erneut verschickt werden. Hierbei ergeben sich hohe Verzögerungszeiten bei der Datenpaketübertragung. Bei echtzeitnahen Anwendungen muss hingegen eine Verzögerungszeit der Datenpaketübertragung niedrig gehalten werden. Somit besteht das Problem, dass für echtzeitnahe Anwendungen ein wiederholtes Übertragen von Datenpaketen nicht durchführbar ist, da damit die Echtzeitanforderung nicht eingehalten werden kann.

Alternativ hierzu kann mit Hilfe eines Vorwärtsfehlerkorrekturcodes, der den zu übertragenden Datenpaketen beigefügt wird, eine Rekonstruktion fehlerhaft empfangener oder fehlender Datenpakete durchgeführt werden. Diese Vorgehensweise zeigt jedoch den Nachteil, dass ein Teil der Übertragungsbandbreite zur Übermittlung des Vorwärtsfehlerkorrekturcodes (=Redundanz) belegt wird. Zudem wird bei Übertragungsstrecken mit stark variierenden Fehlerhäufigkeiten die vorgestellte Vorgehensweise in folgenden Fällen nicht zufriedenstellend arbeiten:
(a) Es wird Redundanz übertragen, obwohl die Datenpakete fehlerfrei am Empfänger ankommen, wodurch Übertragungsbandbreite nutzlos belegt wird.
(b) Es wird Redundanz übertragen, die jedoch aufgrund der großen Fehlerhäufigkeit nicht ausreicht, um die fehlerhaft empfangenen bzw. fehlenden Datenpakete vollständig rekonstruieren zu können.

Fehlerkossigierende ARQ Verfahren für paketorientierte Multimedia Kommunikationssysteme sind aus US 5,550,847 und US 6,104,757 bekannt.

Somit besteht die Aufgabe darin, ein Verfahren und eine Vorrichtung zum Verarbeiten von Datenpaketen eines Datenstroms anzugeben, das/die bei echtzeitnahen Anwendungen das erneute Übertragen von Datenpaketen ermöglicht.

Diese Aufgabe wird durch die Gegenstände der Ansprüche 1, 3, 8, 10 und 15 gelöst. Die abhängigen Ansprüche stellen Ausführungsvarianten der Erfindung dar.

Die Erfindung betrifft in einer ersten Ausführungsform eine Vorrichtung zum Verarbeiten von Datenpaketen eines Datenstroms mit ersten Datenpaketen, die fehlerfrei empfangene Datenpakete repräsentieren, mit zweiten Datenpaketen, die fehlerhaft empfangene oder fehlende Datenpakete repräsentieren, und mit dritten Datenpaketen, die aufgrund einer erneuten Übertragung der als zweite Datenpakete repräsentierten Datenpakete fehlerfrei empfangen sind, wobei eine Menge der ersten Datenpakete und eine Menge der dritten Datenpakete disjunkt sind, wobei die Vorrichtung umfasst:
eine erste Einheit zum Verarbeiten der ersten und zweiten Datenpakete in vierte Datenpakete;
eine Steuereinheit
   - zum Aktivieren eines ersten Modus bei Erkennen eines zweiten Datenpakets;
   - zum Erzeugen einer Kopie der ersten Einheit in Form einer zweiten Einheit bei Aktivieren des ersten Modus;
   - zum Aktivieren eines zweiten Modus nachdem für jedes der zweiten Datenpakete das dazugehörige dritte Datenpaket vorliegt;
die zweite Einheit zum Verarbeiten der ersten und dritten Datenpakete in fünfte Datenpakete ab Aktivierung des ersten Modus, wobei einer Datensenke bis zum Aktivieren des zweiten Modus die erste Einheit die vierten Datenpakete und nach Aktivieren des zweiten Modus die zweite Einheit die fünften Datenpakete zustellen.

Als zweites Datenpaket wird ein fehlerhaft empfangenes oder ein nicht empfangenes aber erwartetes, d.h. also ein fehlendes Datenpaket verstanden. Falls das Datenpaket nicht empfangen wurde kann ein zweites Datenpaket erzeugt werden, welches fehlende Datenpaket, bspw. mit einem leeren Datenfeld, repräsentiert.

Der Kern der Erfindung besteht darin, dass im Falle von fehlerhaften empfangenen oder fehlenden Datenpaketen, das heißt von zweiten Datenpaketen, die Verarbeitung der Datenpakete durch zwei unabhängig laufende Einheiten, die erste und zweite Einheit, durchgeführt wird. Die erste Einheit verarbeitet die ersten und zweiten Datenpakete und liefert dabei in Echtzeit die vierten Datenpakete, die einer Datensenke übermittelt werden. Parallel dazu verarbeitet die zweite Einheit die ab dem Auftreten der zweiten Datenpakete anfallenden ersten und dritten Datenpakete in fünfte Datenpakete. Hierdurch wird gewährleistet, dass die zweite Einheit den Datenstrom fehlerfrei derart decodiert, dass hierzu zunächst eine größere Verzögerungszeit in Kauf zu nehmen ist. Erst zu dem Zeitpunkt, an dem alle zweiten Datenpakete durch korrespondierende dritte Datenpakete ersetzt werden können, d.h. zum Zeitpunkt des Aktivierens des zweiten Modus, kann die zweite Einheit den Datenstrom in Echtzeit der Datensenke anbieten. Genau zu diesem Zeitpunkt wird dann der zweite Modus aktiviert, bei dem an Stelle der vierten Datenpakete nun nur die fünften Datenpakete an die Datensenke übermittelt werden. Hierdurch wird gewährleistet, dass zum einen die Datensenke die verarbeiteten Datenpakete in Echtzeit erhält und nachdem in der zweiten Einheit der Datenstrom in Echtzeit und fehlerfrei wiedergegeben werden kann, nachfolgend verarbeitete erste Datenpakete an die Datensenke übermittelt werden kann.

Ein weiterer Vorteil der vorliegenden Erfindung ist darin zu sehen, dass der einfache Mechanismus der wiederholten Übertragung, wie beispielsweise heute bei TCP/IP im Internet (TCP - Transport Control Protocol, IP - Internet Protocol), verwendet werden kann, so dass die vorliegende Vorrichtung beziehungsweise das korrespondierende Verfahren mit geringem Aufwand in ein heute bestehendes Übertragungssystem integriert werden kann.

Ferner zeigt sich als Vorteil die Verwendung der oben genannten Vorrichtung bei prädiktiven Kodierverfahren. Hierbei werden Informationen, z.B. Bilddaten, von bereits kodierten Informationen prädiziert. Im Stand der Technik, z.B. bei dem ITU-T H.263 Videokodierverfahren, ist es bei Auftreten von Übertragungsfehlern, siehe zweites Datenpaket, notwendig, die Information ohne Prädiktion zu kodieren, um Folgefehler aufgrund der Übertragungsfehler zu vermeiden. Die Kodierung ohne Prädiktion bedingt einen hohen Bandbreitenbedarf. Die Vorrichtung hingegen ermöglicht bei Auftreten von Übertragungsfehlern eine zwangsweise Kodierung ohne Prädiktion zur Vermeidung von Folgefehlern zu umgehen und erspart damit Bandbreite. Durch die Einsparung an Bandbreite wird auch eine Rate der Informationsübertragung, z.B. die Bildwiederholrate, hoch gehalten, da im Gegensatz zum Stand der Technik Bandbreite anstelle einer zwangsweisen Kodierung ohne Prädiktion zur Kodierung weiterer Information zu Verfügung steht.

Unter Erzeugen einer Kopie der ersten Einheit in Form einer zweiten Einheit bei Aktivieren des ersten Modus wird verstanden, dass zum Zeitpunkt des Aktivierens des ersten Modus die erste und zweite Einheit derart initialisiert sind, dass diese bei Dekodierung eines oder mehrerer gleicher Datenpakte, z.B. des ersten Datenpakets, das identische Dekodierergebnis liefern. Sind bspw. die erste und zweite Einheit in Software realisiert, so kann das Erzeugen der Kopie derart durchgeführt werden, dass die Variablenwerte und Programmzustände beider Einheiten identisch sind.

Die Menge der ersten Datenpakete und die Menge der dritten Datenpakete sind disjunkt. Hierunter wird verstanden, dass Datenpakete des Datenstroms entweder als erste oder dritte Datenpakete repräsentiert werden. Eines der Datenpakete des Datenstroms ist somit nicht sowohl eines der ersten Datenpakete als auch eines der dritten Datenpakete.

Die Steuereinheit der ersten Ausführungsform kann ferner vorsehen, nach Aktivierung des zweiten Modus die erste Einheit zu entfernen. Hierdurch werden Systemressourcen einer möglichen Softwareimplementierung freigegeben, wodurch eine Gesamtperformance der Vorrichtung verbessert werden kann, bspw. durch zusätzlich zur Verfügung stehenden Speicher.

Vorzugsweise umfasst die Vorrichtung in der ersten Ausführungsform eine Zuführeinheit zum Zustellen der vierten Datenpakete der Datensenke bis zur Aktivierung des zweiten Modus und zum Zustellen der fünften Datenpakete nach Aktivierung des zweiten Modus. Hierdurch kann das Zustellen der durch die erste und zweite Einheit verarbeiteten Datenpakete in Abhängigkeit vom Modus in einfacher Weise gesteuert werden.

Wird gemäß der ersten Ausführungsform in der ersten Einheit bei der Verarbeitung der ersten und zweiten Datenpakete ferner eine Fehlerverschleierung eingesetzt, so kann eine Qualität, bspw. eine Bildqualität, der vierten Datenpakete verbessert wird.

Die Erfindung umfasst ferner in einer zweiten Ausführungsform eine Vorrichtung zum Verarbeiten von Datenpaketen eines Datenstroms mit ersten Datenpaketen, die fehlerfrei empfangene Datenpakete repräsentieren, zweiten Datenpaketen, die fehlerhaft empfangene oder nicht empfangene Datenpakete repräsentieren und dritte Datenpakete, die aufgrund einer erneuten Übertragung der als zweite Datenpakete repräsentierten Datenpakete fehlerfrei empfangen sind, wobei eine Menge der ersten Datenpakete und eine Menge der dritten Datenpakete disjunkt sind, wobei die Vorrichtung umfasst:
Eine erste Einheit zum Verarbeiten der ersten und dritten Datenpakete in vierte Datenpakete;
Eine Steuereinheit
   - zum Aktivieren eines ersten Modus bei Erkennen eines zweiten Datenpakets;
   - zum Erzeugen einer Kopie der ersten Einheit in Form einer zweiten Einheit bei Aktivierung des ersten Modus;
   - zum Aktivieren eines zweiten Modus nachdem für jedes der zweiten Datenpakete das dazugehörige dritte Datenpaket vorliegt;

Die zweite Einheit zum Verarbeiten der ersten und zweiten Datenpakete in fünfte Datenpakete ab Aktivieren des ersten Modus, wobei einer Datensenke bis zum Aktivieren des ersten Modus und nach Aktivieren des zweiten Modus die erste Einheit die vierten Datenpakete und nach Aktivieren des ersten Modus und bis zum Aktivieren des zweiten Modus die zweite Einheit die fünften Datenpakete jeweils zustellt.

Diese zweite Ausführungsform stellt eine alternative Realisierung zu der ersten Ausführungsform dar. Somit gelten im Allgemeinen die Vorteile der ersten Ausführungsform analog auch für die zweite Ausführungsform. Die zweite Ausführungsform hat zudem noch den Vorteil, dass die erste Einheit immer eine Verarbeitung der ersten und dritten Datenpakete durchführt und somit bspw. in Hardware realisiert sein kann. Dagegen muss in der zweiten Ausführungsform die zweite Einheit nur temporär eingesetzt werden und ist somit bspw. in Software realisierbar.

Vorzugsweise ist bei der zweiten Ausführungsform die Steuereinheit ferner ausgebildet nach Aktivieren des zweiten Modus die zweite Einheit zu entfernen. Hierdurch werden Systemressourcen einer möglichen Softwareimplementierung freigegeben, wodurch eine Gesamtperformance der Vorrichtung verbessert werden kann, bspw. durch zusätzlich zur Verfügung stehenden Speicher.

Vorzugsweise ist bei der zweiten Ausführungsform die Steuereinheit ferner ausgebildet
- zum Zustellen der vierten Datenpakete der Datensenke bis zum Aktivieren des ersten Modus und nach Aktivieren des zweiten Modus,
- zum Zustellen der fünften Datenpakete der Datensenke nach Aktivieren des ersten Modus und bis zum Aktivieren des zweiten Modus.

Hierdurch kann das Zustellen der durch die erste und zweite Einheit verarbeiteten Datenpakete in Abhängigkeit vom Modus in einfacher Weise gesteuert werden.

Vorzugsweise ist bei der zweiten Ausführungsform die zweite Einheit zum Verarbeiten der ersten und zweiten Datenpakete ferner mit Hilfe einer Fehlerverschleierung ausgebildet. Hierdurch ist die Qualität, z.B. einer Bildqualität, der vierten Datenpakete verbesserbar.

Vorzugsweise ist die Steuereinheit ferner so ausgebildet ist, der zweite Modus erst aktivierbar ist, wenn für jedes der zweiten Datenpakete das dazugehörige dritte Datenpaket vorliegt und die erste Einheit und die zweite Einheit nahezu gleichzeitig das gleiche erste Datenpaket verarbeiten. Hierdurch wird gewährleistet, dass die Datensenke ohne erkennbare Verzögerung die fünften Datenpakete anstelle der vierten Datenpakete, ab Aktivieren des zweiten Modus erhalten kann. Unter nahezu gleichzeitig wird verstanden, dass bei der erste und der zweite Einheit das gleiche erste Datenpaket zu einem Zeitpunkt in Verarbeitung ist, bspw. Hat die erste Einheit 95% des ersten Datenpakets und die zweite Einheit 10% des gleichen ersten Datenpakets verarbeitet.

In einer Weiterbildung umfasst die zweite Einheit fernen einen Speicher zum Zwischenspeichern von ersten und dritten Datenpaketen und eine Sortiereinheit zum Sortieren der ersten und dritten Datenpakete, wobei die Sortiereinheit eine zeitliche Abfolge der ersten und dritten Datenpakete zur ordnungsgemäßen Verarbeitung gewährleistet. Hierdurch kann die zweite Einheit mit einem identischen Aufbau zur ersten Einheit verwendet werden, da das Zwischenspeichern und Sortieren durch die Steuereinheit abgewickelt wird. Dadurch kann die zweite Einheit kostengünstig und mit geringem Entwicklungsaufwand generiert werden.

Der Datenstrom weist vorzugsweise codierte Multimediadaten, insbesondere codierte Videodaten, auf und die erste und zweite Einheit sind vorzugsweise jeweils als Analyseeinheit, insbesondere als Bild- oder Videoanalyseeinheit, zum Analysieren der Multimediadaten, ausgebildet. Hierdurch ist die Vorrichtung bei einer Analyseeinrichtung, insbesondere zur Überwachung, einsetzbar.

Alternativ dazu weist der Datenstrom codierte Multimediadaten, insbesondere codierte Videodaten, auf, und die erste und zweite Einheit sind jeweils als Decodiereinheit, insbesondere als Videodecodiereinheit, zum Decodieren der codierten Multimediadaten ausgebildet. Hierdurch ist die Vorrichtung bei einer Decodiereinrichtung, insbesondere zum Decodieren eines codierten Videos, einsetzbar.

Die Erfindung betrifft in einer dritten Ausführungsform auch ein Verfahren zum Verarbeiten von Datenpaketen eines Datenstroms mit ersten Datenpaketen, die fehlerfrei empfangene Datenpakete repräsentieren, zweiten Datenpaketen, die fehlerhaft empfangene oder fehlende d.h. nicht empfangene, Datenpakete repräsentieren und dritte Datenpakete, die aufgrund einer erneuten Übertragung der als zweite Datenpakete repräsentierten Datenpakete fehlerfrei empfangen sind, wobei eine Menge der ersten Datenpakete und eine Menge der dritten Datenpakete disjunkt sind, wobei folgende Schritte durchgeführt werden:
- Verarbeiten der ersten und zweiten Datenpakete in vierte Datenpakete durch die erste Einheit;
- Aktivieren eines ersten Modus bei Erkennen eines zweiten Datenpakets;
- Erzeugen einer Kopie der ersten Einheit in Form einer zweiten Einheit bei Aktivieren des ersten Modus;
- Aktivieren eines zweiten Modus nachdem für jedes der zweiten Datenpakete das dazugehörige dritte Datenpaket vorliegt;
- Verarbeiten der ersten und dritten Datenpakete in fünfte Datenpakete durch die zweite Einheit ab Aktivieren des ersten Modus, wobei einer Datensenke bis zum Aktivieren des zweiten Modus die vierten Datenpakete und nach Aktivieren des zweiten Modus die fünften Datenpakete zugestellt werden.

Die Vorteile hierzu sind analog zu denen der Vorrichtung der ersten Ausführungsform.

Wird nach Aktivierung des zweiten Modus die erste Einheit entfernt, so können in der Systemressourcen zur Durchführung des Verfahrens eingespart werden.

Vorzugsweise werden mit einer Zuführeinheit bis zur Aktivierung des zweiten Modus die vierten Datenpakete der Datensenke und nach Aktivierung des zweiten Modus die fünften Datenpakete zugestellt. Hierdurch kann das Zustellen der verarbeiteten Datenpakete in Abhängigkeit vom Modus in einfacher Weise gesteuert werden.

A16: In einer Weiterbildung des Verfahrens werden durch die erste Einheit die ersten und zweiten Datenpakete ferner mit Hilfe einer Fehlerverschleierung verarbeitet. Hierdurch wird eine Qualität, bspw. eine Bildqualität, der vierten Datenpakete verbessert.

Die Erfindung betrifft in einer vierten Ausführungsform auch ein Verfahren zum Verarbeiten von Datenpaketen eines Datenstroms mit ersten Datenpaketen, die fehlerfrei empfangene Datenpakete repräsentieren, zweiten Datenpaketen, die fehlerhaft empfangene oder fehlende Datenpakete repräsentieren und dritte Datenpakete, die aufgrund einer erneuten Übertragung der als zweite Datenpakete repräsentierten Datenpakete fehlerfrei empfangen sind, wobei eine Menge der ersten Datenpakete und eine Menge der dritten Datenpakete disjunkt sind, wobei folgende Schritte durchgeführt werden:
- Verarbeiten der ersten und dritten Datenpakete in vierte Datenpakete durch eine erste Einheit;
- Aktivieren eines ersten Modus bei Erkennen eines zweiten Datenpakets;
- Erzeugen einer Kopie der ersten Einheit in Form einer zweiten Einheit bei Aktivieren des ersten Modus;
- Aktivieren eines zweiten Modus nachdem für jedes der zweiten Datenpakete das dazugehörige dritte Datenpaket vorliegt;
- Verarbeiten der ersten und zweiten Datenpakete in fünfte Datenpakete durch die zweite Einheit ab Aktivieren des ersten Modus, wobei einer Datensenke bis zum Aktivieren des ersten Modus und nach Aktivieren des zweiten Modus die vierten Datenpakete und nach Aktivieren des ersten Modus und bis zum Aktivieren des zweiten Modus die fünften Datenpakete zugestellt werden.

Die Vorteile hierzu sind analog zu denen der Vorrichtung der zweiten Ausführungsform.

Wird gemäß der vierten Ausführungsform nach Aktivieren des zweiten Modus die zweite Einheit entfernt, so können in der Systemressourcen zur Durchführung des Verfahrens eingespart werden.

Vorzugsweise werden bei der vierten Ausführungsform mittels einer Zuführeinheit bis zum Aktivieren des ersten Modus und nach Aktivieren des zweiten Modus die vierten Datenpakete der Datensenke und nach Aktivierung des ersten Modus und bis zum Aktivieren des zweiten Modus die fünften Datenpakete der Datensenke zugestellt. Hierdurch kann das Zustellen der verarbeiteten Datenpakete in Abhängigkeit vom Modus in einfacher Weise gesteuert werden.

Ferner kann in der vierten Ausführungsform durch die zweite Einheit die ersten und zweiten Datenpakete ferner mit Hilfe einer Fehlerverschleierung verarbeitet werden. Hierdurch ist eine Erhöhung einer Qualität der verarbeiteten Datenpakete, d.h. der fünften Datenpakete, erzielbar.

Wird der zweite Modus aktiviert, nachdem für jedes der zweiten Datenpakete das dazugehörige dritte Datenpaket vorliegt und die erste Einheit und die zweite Einheit nahezu gleichzeitig dasselbe erste Datenpaket verarbeiten, so wird hierdurch gewährleistet, dass die Datensenke ohne erkennbare Verzögerung die fünften Datenpakete anstelle der vierten Datenpakete ab dem Zeitpunkt des Aktivierens des zweiten Modus erhalten kann.

Vorzugsweise werden durch die Steuereinheit mittels eines Speichers erste und dritte Datenpakete zwischengespeichert und mittels einer Sortiereinheit die ersten und dritten Datenpakete sortiert, wobei durch die Sortiereinheit eine zeitliche Abfolge der ersten und dritten Datenpakete zur ordnungsgemäßen Verarbeitung gewährleistet wird. Hierdurch kann die zweite Einheit mit einem identischen Aufbau zur ersten Einheit eingesetzt werden, da das Zwischenspeichern und Sortieren durch die Steuereinheit abgewickelt wird. Dadurch kann auch, die zweite Einheit kostengünstig und mit geringem Entwicklungsaufwand generiert werden.

Vorzugweise weist der Datenstrom codierte Multimediadaten, insbesondere codierte Videodaten, auf, und die erste und zweite Einheit sind jeweils als Analyseeinheit, insbesondere als Bild- oder Videoanalyseeinheit, zum Analysieren der Multimediadaten, ausgebildet. Hierdurch ist die Vorrichtung bei einer Analyseeinrichtung, insbesondere zur Überwachung, einsetzbar.

Alternativ dazu weist der Datenstrom codierte Multimediadaten, insbesondere codierte Videodaten, auf, und die erste und zweite Einheit sind jeweils als Decodiereinheit, insbesondere als Videodecodiereinheit, zum Decodieren der codierten Multimediadaten ausgebildet. Hierdurch ist die Vorrichtung bei einer Decodiereinrichtung, insbesondere zum Decodieren eines codierten Videos, einsetzbar.

Schließlich betrifft die Erfindung eine Verwendung dar Vorrichtung gemäß zumindest einem der oben ausgeführten Ausführungen, wobei die Vorrichtung zur Analyse von Videodaten im Rahmen einer Überwachungseinrichtung eingesetzt ist. Durch Verwendung der Erfindung im Rahmen der Überwachungseinrichtung wird eine Verbesserung der Analyse der Videodaten ermöglicht.

Die Erfindung und ihre Weiterbildung werden anhand von Zeichnungen näher erläutert. Es zeigen:
- Figur 1: einen Sender zum Übermitteln von Datenpaketen, eine Vorrichtung zum Verarbeiten von Datenpaketen sowie einen Empfänger zur Wiedergabe von erarbeiteten Datenpaketen;
- Figur 2: eine Überwachungseinheit umfassend die Vorrichtung zum Verarbeiten von Datenpaketen;
- Figur 3: ein Ablaufdiagramm zur Durchführung eines Verfahrens zur Verarbeitung von Datenpaketen.

Elemente mit gleicher Funktion und Wirkungsweise sind in den Figuren mit denselben Bezugszeichen versehen.

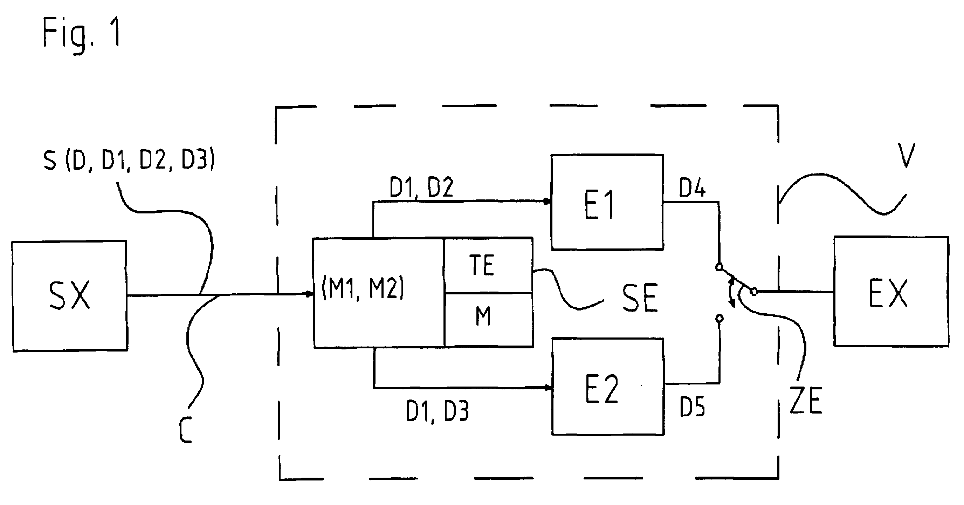

Figur 1 zeigt ein Ausführungsbeispiel der Erfindung. Hierbei werden in einem Sender SX Echtzeitbilddaten von einer Kamera erfasst und in Form eines Datenstroms S codiert. Die Codierung erfolgt hier mit Hilfe eines standardisierten Videocodierverfahrens, bspw. nach einem MPEG-2 oder H.264-Verfahren (MPEG - Motion Picture Expert Group). Der Datenstrom S wird zur Übertragung in Datenpakete D aufgeteilt.

Die Datenpakete D des Datenstroms S werden von der Sendeeinheit SX über einen Übertragungskanal C zur Vorrichtung V übermittelt. Der Übertragungskanal arbeitet bspw. nach dem WLAN-Standard (WLAN - Wireless Local Area Network), bei dem Übermittlungsfehler auftreten können. Die über den Übertragungskanal C übertragenen Datenpakete D werden durch eine Steuereinheit SE der Vorrichtung V empfangen. Dabei werden als erste Datenpakete D1 fehlerfrei empfangene Datenpakete und als zweite Datenpakete D2 Datenpakete verstanden, die fehlerhaft empfangen oder nicht empfangen worden sind. So kann die Steuereinheit bspw. anhand einer Sequenznummer erkennen, dass eines der vom Sender SX übertragenen Datenpakete bei der Steuereinheit fehlt, wobei das fehlende Datenpaket als zweites Datenpaket klassifiziert wird.

Die Steuereinheit SE leitet die ersten und zweiten Datenpakete D1, D2 zu einer ersten Einheit E1 zur Verarbeitung. Wurde ein Datenpaket nicht empfangen, so kann die Steuereinheit SE ein leeres zweites Datenpaket D2 weiterreichen. Im vorliegenden Ausführungsbeispiel ist die erste Einheit E1 eine erste Videodecodiereinheit, die die ersten und zweiten Datenpakete decodiert und hieraus die vierten Datenpakete D4 erzeugt. Die erste Einheit E1 verfügt optional über eine Fehlerverschleierungseinheit, die fehlende Datenpakete oder fehlerhafte Datenpakete, das heißt also zweite Datenpakete, derart bearbeitet, dass die vierten Datenpakete lediglich geringe visuelle Degradationen aufweisen. Die vierten Datenpakete werden einer Datensenke EX, bspw. einem Monitor, zugeleitet. Hierzu ist eine Zuführeinheit ZE in Form eines Schalterelements derart ausgestaltet, dass es zunächst nur die vierten Datenpakete weiterleitet.

Die Steuereinheit SE untersucht die empfangenen Datenpakete und ermittelt, ob ein zweites Datenpaket vorhanden ist. Beispielsweise erkennt die Steuereinheit SE das zweite Datenpaket anhand eines Fehlerkorrekturcodes, beispielsweise einem CRC Prüfcode (CRC - Check Redundancy Code) oder anhand einer fehlenden Sequenznummer, die eben anzeigt, dass eines der Datenpakete bei der Übertragung über den Kanal C verloren gegangen ist. Beim Erkennen eines zweiten Datenpakets D2 aktiviert die Steuereinheit SE den ersten Modus M1. Zu diesem Zeitpunkt wird eine zweite Einheit E2 zum Verarbeiten von Datenpaketen parametriert und möglicherweise auch erzeugt. Werden die erste und die zweite Einheit beispielsweise mit einer objektorientierten Programmiersprache jeweils als Einheitsobjekte generiert, so kann die zweite Einheit durch Anlegen eines zweiten Einheitsobjekts, zum Beispiel einer zweiten Videodecodiereinheit, und durch Kopieren aller Variablenwerte und Zustände des ersten Einheitsobjekts (=erste Einheit) sozusagen als vollständige Kopie der ersten Einheit, erzeugt werden.

Daneben fordert die Steuereinheit SE diejenigen zweiten Datenpakete von dem Sender SX an, die bei der Steuereinheit als dritte Datenpakete fehlerfrei empfangen werden. Hierbei ist wichtig zu erwähnen, dass diese dritten Datenpakete D3 nicht Teilmenge der ersten Datenpakete D1 sind. Ab dem Zeitpunkt des Aktivierens des ersten Modus M1 überträgt die Steuereinheit SE die ersten und die dritten Datenpakete an die zweite Einheit E2. Die zweite Einheit E2 führt ebenfalls eine Verarbeitung, wie beispielsweise die Decodierung der ersten und dritten Datenpakete, in fünfte Datenpakete D5 durch. Während der erste Modus aktiv ist werden vierte und fünfte Datenpakete erstellt, wobei lediglich die vierten Datenpakete an die Datensenke weitergeleitet werden. Die vierten und fünften Datenpakete werden auch als verarbeitete Datenpakete bezeichnet.

Nachdem für alle zweiten Datenpakete das jeweils dazugehörige Datenpaket der zweiten Einheit E2 vorliegt, wird durch die Steuereinheit der zweite Modus M2 aktiviert, wodurch der erste Modus M1 deaktiviert wird. Zu diesem Zeitpunkt schaltet die Zuführeinheit ZE derart, dass im Folgenden der Datensenke EX, d.h. dem Empfänger an Stelle der vierten Datenpakete D4 nur noch die fünften Datenpakete D5 übertragen werden. Die Aktivierung des zweiten Modus M2 findet in einer Variante ferner erst dann statt, nachdem die erste und die zweite Einheit E1, E2 nahezu gleichzeitig das gleiche erste Datenpaket verarbeiten. Unter nahezu gleichzeitig wird verstanden, dass bei der erste und der zweite Einheit das gleiche erste Datenpaket zu einem Zeitpunkt in Verarbeitung ist, bspw. Hat die erste Einheit 95% des ersten Datenpakets und die zweite Einheit 10% des gleichen ersten Datenpakets verarbeitet. Da die dritten Datenpakete mit einer Verzögerung die Steuereinheit SE erreichen, speichert diese die dritten Datenpakete in einem Zwischenspeicher M mit Hilfe einer Sortiereinheit TE zwischen und sortiert die ersten und dritten Datenpakete derart, dass der zweiten Einheit die ersten und dritten Datenpakete in der richtigen Reihenfolge, z.B. mit aufsteigender Sequenznummer, zugestellt werden. Erst nachdem die zweite Einheit das gleiche erste Datenpaket wie die erste Einheit verarbeitet hat, kann die zweite Einheit die nachfolgenden ersten Datenpakete in Echtzeit ausgeben. Somit kann dann eine Umschaltung von den vierten auf die fünften Datenpakete zur Zustellung an die Datensenke erfolgen, ohne dass die Datensenke eine Verzögerung bei der Zustellung der verarbeiteten Datenpakete wahrnimmt.

Zum Zeitpunkt des Aktivierens des zweiten Modus M2 kann die erste Einheit deaktiviert und/oder gelöscht werden, da ab diesem Zeitpunkt nur noch verarbeitete Datenpakete der zweiten Einheit E2, d.h. die fünften Datenpakete D5, der Datensenke zugestellt werden. Durch das Löschen der ersten Einheit werden Systemressourcen einer möglichen softwaremäßigen Implementierung freigegeben.

Die Vorrichtung V gemäß Figur 1 umfasst neben der Steuereinheit SE, die erste und zweite Einheit E1, E2 und die Zuführeinheit TE.

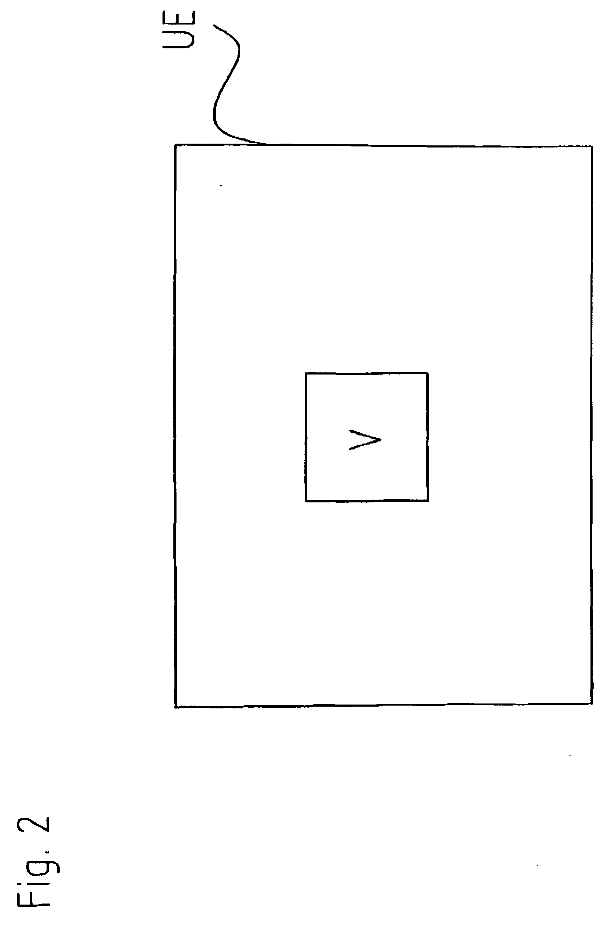

In Figur 2 ist symbolhaft die Verwendung der Vorrichtung V im Rahmen einer Überwachungseinrichtung UE abgebildet. Hierbei werden durch die Datenpakete Bilddaten übertragen. Die erste und zweite Einheit sind dabei eine jeweilige Analyseeinheit zur Untersuchung von Bildinhalten der Bilddaten, bspw. die eine Personenerkennung durchgeführt. Durch Verwendung der ersten und zweiten Datenpakete wird die Echtzeit-Bildanalyse ermöglicht, wobei jedoch Fehler in der Analyse in Kauf genommen werden. Durch die zeitlich parallele Analyse der ersten und dritten Datenpakete durch die zweite Einheit wird eine optimale Bildanalyse gewährleistet, da die zweite Einheit auf fehlerfreien Bilddaten arbeitet. Nachdem der zweite Modus erreicht ist, wird nur noch die Bildanalyse mittels der zweiten Einheit weiterverfolgt. Somit ist eine Bildanalyse zum einen in Echtzeit möglich und zum anderen kann nach Zustellung aller dritten Datenpakete die optimale Bildanalyse erreicht werden, die dann auch wieder in Echtzeit zur Verfügung steht.

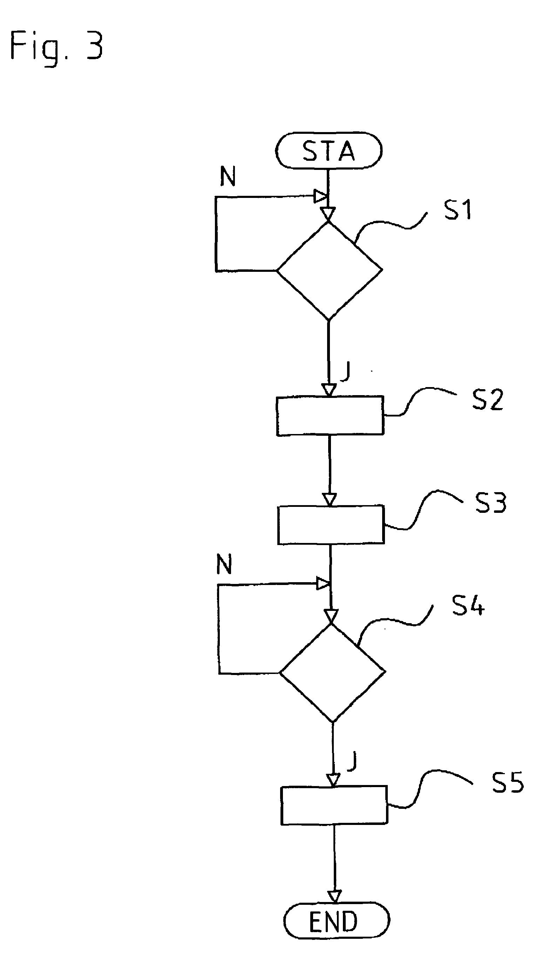

Die Erfindung betrifft neben der Vorrichtung auch ein Verfahren mit folgenden Schritten, die anhand eines Ablaufdiagramms gemäß Figur 3 näher erläutert werden:
STA: Das Ablaufdiagramm wird im Schritt STA gestartet.
S1: Im Schritt S1 wird überprüft, ob das gerade empfangene Datenpaket ein zweites Datenpaket ist bzw. ein zweites Datenpaket anzeigt, d.h. es selbst fehlerhaft ist oder es auf ein nicht empfangenes Datenpaket schließen lässt. Falls dies mit nein beantwortet wird, folgt Schritt S1 wieder, ansonsten Schritt S2.
S2: Im Schritt S2 wird der erste Modus M1 aktiviert. Erste und zweite Datenpakete werden während des ersten Modus von der ersten Einheit E1 verarbeitet. Die verarbeiteten Datenpakete, d.h. die vierten Datenpakete, werden an die Datensenke übermittelt. Es folgt Schritt S3.
S3: Im Schritt S3 wird die zweite Einheit E2 als Kopie der ersten Einheit E1 in Betrieb genommen. Erste und dritte Datenpakete D1, D3 werden durch die zweite Einheit E2 in fünfte Datenpakete verarbeitet. Nachfolgend wird Schritt S4 durchlaufen.
S4: Im Schritt S4 wird überprüft, ob für alle zweiten Datenpakete jeweils ein drittes Datenpaket D3 empfangen wurden. Falls dies nicht der Fall ist wird der Schritt S4 wiederholt, ansonsten mit Schritt S5 fortgefahren.
S5: In diesem Schritt S5 wird der zweite Modus M2 aktiviert. Anstelle der vierten Datenpakete werden die fünften Datenpakete an die Datensenke übertragen. Im Folgenden wird Schritt END durchlaufen.
END: In diesem Schritt wird das Ablaufdiagramm beendet.

Die Erfindung und ihre Weiterbildungen können in Soft- oder Hardware oder in Kombination aus Soft- und Hardware implementiert und ausgeführt werden. Neben der Verarbeitung in Form der Bildanalyse und Videodekodierung sind weitere Anwendungsgebiete bspw. in der Audiocodierung oder Sprachcodierung möglich.

Die Erfindung und ihre Weiterbildung sind anhand der ersten bzw. dritten Ausführungsform exemplarisch dargestellt worden. Eine Implementierung und Ausführung der zweiten bzw. vierten Ausführungsform ist dazu in analoger Weise durchführbar.

## Patentansprüche

1. Vorrichtung (V) zum Verarbeiten von Datenpaketen (D) eines Datenstroms (S) mit ersten Datenpaketen (D1), die fehlerfrei empfangene Datenpakete (D) repräsentieren, mit zweiten Datenpaketen (D2), die fehlerhaft empfangene oder nicht empfangene Datenpakete (D) repräsentieren und mit dritten Datenpaketen (D3), die aufgrund einer erneuten Übertragung der als zweite Datenpakete (D2) repräsentierten Datenpakete (D) fehlerfrei empfangen sind, wobei eine Menge der ersten Datenpakete und eine Menge der dritten Datenpakete disjunkt sind, wobei die Vorrichtung (V) umfasst:
eine erste Einheit (E1) zum Verarbeiten der ersten und zweiten Datenpakete (D1, D2) in vierte Datenpakete (D4);
eine Steuereinheit (SE)
- zum Aktivieren eines ersten Modus (M1) bei Erkennen eines zweiten Datenpakets (D2);
- zum Erzeugen einer Kopie der ersten Einheit (E1) in Form einer zweiten Einheit (E2) bei Aktivierung des ersten Modus (M1);
- zum Aktivieren eines zweiten Modus (M2), nachdem für jedes der zweiten Datenpakete (D2) das dazugehörige dritte Datenpaket (D3) vorliegt;
die zweite Einheit (E2) zum Verarbeiten der ersten und dritten Datenpakete (D1, D3) in fünfte Datenpakete (D5) ab Aktivieren des ersten Modus (M1), wobei einer Datensenke (EX) bis zum Aktivieren des zweiten Modus (M2) die erste Einheit (E1) die vierten Datenpakete (D4) und nach Aktivieren des zweiten Modus (M2) die zweite Einheit (E2) die fünften Datenpakete (D5) zustellen.

2. Vorrichtung (V) nach Anspruch 1,
mit der Steuereinheit (SE), die ferner ausgebildet ist, nach Aktivieren des zweiten Modus (M2) die erste Einheit (E1) zu entfernen; und mit einer Zuführeinheit (ZE)
- zum Zustellen der vierten Datenpakete (D4) der Datensenke (EX) bis zum Aktivieren des zweiten Modus (M2),
- zum Zustellen der fünften Datenpakete (D5) der Datensenke (EX) nach Aktivieren des zweiten Modus (M2);
wobei bei der Vorrichtung (V) die erste Einheit (E1) die ersten und zweiten Datenpakete ferner mit Hilfe einer Fehlerverschleierung verarbeitet.

3. Vorrichtung (V) zum Verarbeiten von Datenpaketen (D) eines Datenstroms (S) mit ersten Datenpaketen (D1), die fehlerfrei empfangene Datenpakete (D) repräsentieren, mit zweiten Datenpaketen (D2), die fehlerhaft empfangene oder nicht empfangene Datenpakete (D) repräsentieren und mit dritten Datenpaketen (D3), die aufgrund einer erneuten Übertragung der als zweite Datenpakete (D2) repräsentierten Datenpakete (D) fehlerfrei empfangen sind, wobei eine Menge der ersten Datenpakete und eine Menge der dritten Datenpakete disjunkt sind, wobei die Vorrichtung (V) umfasst:
eine erste Einheit (E1) zum Verarbeiten der ersten und dritten Datenpakete (D1, D3) in vierte Datenpakete (D4);
eine Steuereinheit (SE)
- zum Aktivieren eines ersten Modus (M1) bei Erkennen eines zweiten Datenpakets (D2);
- zum Erzeugen einer Kopie der ersten Einheit (E1) in Form einer zweiten Einheit (E2) bei Aktivierung des ersten Modus (M1);
- zum Aktivieren eines zweiten Modus (M2), nachdem für jedes der zweiten Datenpakete (D2) das dazugehörige dritte Datenpaket (D3) vorliegt;
die zweite Einheit (E2) zum Verarbeiten der ersten und zweiten Datenpakete (D1, D2) in fünfte Datenpakete (D5) ab Aktivieren des ersten Modus (M1), wobei einer Datensenke (EX) bis zum Aktivieren des ersten Modus (M1) und nach Aktivieren des zweiten Modus (M2) die erste Einheit (E1) die vierten Datenpakete (D4) und nach Aktivieren des ersten Modus (M1) und bis zum Aktivieren des zweiten Modus (M2) die zweite Einheit (E2) die fünften Datenpakete (D5) jeweils zustellt.

4. Vorrichtung (V) nach Anspruch 3,
mit der Steuereinheit (SE), die ferner ausgebildet ist, nach Aktivieren des zweiten Modus (M2) die zweite Einheit (E2) zu entfernen; und
mit einer Zuführeinheit (ZE)
- zum Zustellen der vierten Datenpakete (D4) der Datensenke (EX) bis zum Aktivieren des ersten Modus (M1) und nach Aktivieren des zweiten Modus (M2),
- zum Zustellen der fünften Datenpakete (D5) der Datensenke (EX) nach Aktivieren des ersten Modus (M1) und bis zum Aktivieren des zweiten Modus (M2);
wobei bei der Vorrichtung (V) die zweite Einheit (E2) die ersten und zweiten Datenpakete ferner mit Hilfe einer Fehlerverschleierung verarbeitet.

5. Vorrichtung (V) nach einem der vorangehenden Ansprüche, mit der Steuereinheit (SE), die ferner ausgebildet ist, zum Aktivieren des zweiten Modus (M2) nachdem für jedes der zweiten Datenpakete (D2) das dazugehörige dritte Datenpaket (D3) vorliegt und die erste Einheit (E1) und die zweite Einheit (E2) nahezu gleichzeitig das gleiche erste Datenpaket (D1) verarbeiten.

6. Vorrichtung (V) nach einem der vorangehenden Ansprüche, mit der Steuereinheit (SE), die einen Speicher (M) zum Zwischenspeichern von ersten und dritten Datenpaketen (D1, D3) und eine Sortiereinheit (TE) zum Sortieren der ersten und dritten Datenpakete (D1, D3) umfasst, wobei die Sortiereinheit eine zeitliche Abfolge der ersten und dritten Datenpakete (D1, D3) zur ordnungsgemäßen Verarbeitung gewährleistet.

7. Vorrichtung (V) nach einem der Ansprüche 1 bis 6,
bei der der Datenstrom codierte Multimediadaten, insbesondere codierte Videodaten, aufweist, und
- entweder die erste und zweite Einheit jeweils als Analyseeinheit, insbesondere als Bild- oder Videoanalyseeinheit, zum Analysieren der Multimediadaten, ausgebildet sind;
- oder die erste und zweite Einheit jeweils als Decodiereinheit, insbesondere als Videodecodiereinheit, zum Decodieren der codierten Multimediadaten ausgebildet sind.

8. Verfahren zum Verarbeiten von Datenpaketen (D) eines Datenstroms (S) mit ersten Datenpaketen (D1), die fehlerfrei empfangene Datenpakete (D) repräsentieren, mit zweiten Datenpaketen (D2), die fehlerhaft empfangene oder fehlende Datenpakete (D) repräsentieren und mit dritten Datenpaketen (D3), die aufgrund einer erneuten Übertragung der als zweite Datenpakete (D2) repräsentierten Datenpakete (D) fehlerfrei empfangen sind, wobei eine Menge der ersten Datenpakete und eine Menge der dritten Datenpakete disjunkt sind, wobei folgende Schritte durchgeführt werden:
- Verarbeiten der ersten und zweiten Datenpakete (D1, D2) in vierte Datenpakete (D4) durch eine erste Einheit(E1);
- Aktivieren eines ersten Modus (M1) bei Erkennen eines zweiten Datenpakets (D2);
- Erzeugen einer Kopie der ersten Einheit (E1) in Form einer zweiten Einheit (E2) bei Aktivieren des ersten Modus (M1);
- Aktivieren eines zweiten Modus (M2), nachdem für jedes der zweiten Datenpakete (D2) das dazugehörige dritte Datenpaket (D3) vorliegt;
- Verarbeiten der ersten und dritten Datenpakete (D1, D3) in fünfte Datenpakete (D5) durch die zweite Einheit (E2) ab Aktivieren des ersten Modus (M1), wobei einer Datensenke (EX) bis zum Aktivieren des zweiten Modus (M2) die vierten Datenpakete (D4) und nach Aktivieren des zweiten Modus (M2) die fünften Datenpakete (D5) zugestellt werden.

9. Verfahren nach Anspruch 8,
bei dem nach Aktivieren des zweiten Modus (M2) die erste Einheit (E1) entfernt wird;
bei dem mit einer Zuführeinheit (ZE) bis zum Aktivieren des zweiten Modus (M2) die vierten Datenpakete (D4) der Datensenke (EX) und nach Aktivierung des zweiten Modus (M2) die fünften Datenpakete (D5) der Datensenke (EX) zugestellt werden, und
bei dem durch die erste Einheit (E1) die ersten und zweiten Datenpakete (D1, D2) ferner mit Hilfe einer Fehlerverschleierung verarbeitet werden.

10. Verfahren zum Verarbeiten von Datenpaketen (D) eines Datenstroms (S) mit ersten Datenpaketen (D1), die fehlerfrei empfangene Datenpakete (D) repräsentieren, mit zweiten Datenpaketen (D2), die fehlerhaft empfangene oder fehlende Datenpakete (D) repräsentieren und mit dritten Datenpaketen (D3), die aufgrund einer erneuten Übertragung der als zweite Datenpakete (D2) repräsentierten Datenpakete (D) fehlerfrei empfangen sind, wobei eine Menge der ersten Datenpakete und eine Menge der dritten Datenpakete disjunkt sind, wobei folgende Schritte durchgeführt werden:
- Verarbeiten der ersten und dritten Datenpakete (D1, D3) in vierte Datenpakete (D4) durch eine erste Einheit (E1);
- Aktivieren eines ersten Modus (M1) bei Erkennen eines zweiten Datenpakets (D2);
- Erzeugen einer Kopie der ersten Einheit (E1) in Form einer zweiten Einheit (E2) bei Aktivieren des ersten Modus (M1);
- Aktivieren eines zweiten Modus (M2), nachdem für jedes der zweiten Datenpakete (D2) das dazugehörige dritte Datenpaket (D3) vorliegt;
- Verarbeiten der ersten und zweiten Datenpakete (D1, D2) in fünfte Datenpakete (D5) durch die zweite Einheit (E2) ab Aktivieren des ersten Modus (M1), wobei einer Datensenke (EX) bis zum Aktivieren des ersten Modus (M1) und nach Aktivieren des zweiten Modus (M2) die vierten Datenpakete (D4) und nach Aktivieren des ersten Modus (M1) und bis zum Aktivieren des zweiten Modus (M2) die fünften Datenpakete (D5) zugestellt werden.

11. Verfahren nach Anspruch 10,
bei dem nach Aktivieren des zweiten Modus (M2) die zweite Einheit (E2) entfernt wird;
bei dem mit einer Zuführeinheit (ZE) bis zum Aktivieren des ersten Modus (M1) und nach Aktivieren des zweiten Modus (M2) die vierten Datenpakete (D4) der Datensenke (EX) und nach Aktivierung des ersten Modus (M1) und bis zum Aktivieren des zweiten Modus (M2) die fünften Datenpakete (D5) der Datensenke (EX) zugestellt werden; und
bei dem durch die zweite Einheit (E2) die ersten und zweiten Datenpakete (D1, D2) ferner mit Hilfe einer Fehlerverschleierung verarbeitet werden.

12. Verfahren nach einem der Ansprüche 8 bis 11,
bei dem der zweite Modus (M2) aktiviert wird, nachdem für jedes der zweiten Datenpakete (D2) das dazugehörige dritte Datenpaket (D3) vorliegt und die erste Einheit (E1) und die zweite Einheit (E2) nahezu gleichzeitig das gleiche erste Datenpaket (D1) verarbeiten.

13. Verfahren nach einem der Ansprüche 8 bis 12,
bei dem durch die zweite Einheit (E2) mittels eines Speicher (M) erste und dritte Datenpaketen (D1, D3) zwischengespeichert und mittels einer Sortiereinheit (TE) die ersten und dritten Datenpakete (D1, D3) sortiert werden, wobei durch die Sortiereinheit eine zeitliche Abfolge der ersten und dritten Datenpakete (D1, D3) zur ordnungsgemäßen Verarbeitung gewährleistet wird.

14. Verfahren nach einem der Ansprüche 8 bis 13,
bei dem der Datenstrom codierte Multimediadaten, insbesondere codierte Videodaten, aufweist, und
- entweder die erste und zweite Einheit jeweils als Analyseeinheit, insbesondere als Bild- oder Videoanalyseeinheit, zum Analysieren der Multimediadaten, ausgeführt werden;
- oder die erste und zweite Einheit jeweils als Decodiereinheit, insbesondere als Videodecodiereinheit, zum Decodieren der codierten Multimediadaten ausgeführt werden.

15. Verwendung einer Vorrichtung (V) nach einem der Ansprüche 1 bis 7, bei der die Vorrichtung (V) zur Analyse von Videodaten im Rahmen einer Überwachungseinrichtung (UE) eingesetzt ist.

## Claims

1. A device (V) for processing data packets (D) of a data stream (S), having first data packets (D1) which represent data packets (D) that are received without error, having second data-packets (D2) which represent erroneously received or non-received data packets (D) and having third data packets (D3) which are received without error owing to a repeat transmission of the data packets (D) represented as second data packets (D2), with a set of the first data packets and a set of the third data packets being disjunct, said device (V) comprising:
a first unit (E1) for processing the first and second data packets (D1, D2) into fourth data packets (D4);
a control unit (SE)
- for activating a first mode (M1) when a second data packet (D2) is detected;
- for generating a copy of the first unit (E1) in the form of a second unit (E2) upon activation of the first mode (M1);
- for activating a second mode (M2) once the associated third data packet (D3) is present for each of the second data packets (D2);
the second unit (E2) for processing the first and third data packets (D1, D3) into fifth data packets (D5) from the time of the activation of the first mode (M1), wherein the first unit (E1) delivers the fourth data packets (D4) to a data sink (EX) by the time of the activation of the second mode (M2) and the second unit (E2) delivers the fifth data packets (D5) to the data sink (EX) after the activation of the second mode (M2).

2. A device (V) according to Claim 1, having the control unit (SE), which is also configured to remove the first unit (E1) after the activation of the second mode (M2); and having a feed unit (ZE)
- for delivering the fourth data packets (D4) to the data sink (EX) by the time of the activation of the second mode (M2),
- for delivering the fifth data packets (D5) to the data sink (EX) after the activation of the second mode (M2);
wherein - in the case of the device (V) - the first unit (E1) also processes the first and second data packets with the aid of an error concealment.

3. A device (V) for processing data packets (D) of a data stream (S), having first data packets (D1) which represent data packets (D) that are received without error, having second data-packets (D2) which represent erroneously received or non-received data packets (D) and having third data packets (D3) which are received without error owing to a repeat transmission of the data packets (D) represented as second data packets (D2), with a set of the first data packets and a set of the third data packets being disjunct, said device (V) comprising:
a first unit (E1) for processing the first and third data packets (D1, D3) into fourth data packets (D4);
a control unit (SE)
- for activating a first mode (M1) when a second data packet (D2) is detected;
- for generating a copy of the first unit (E1) in the form of a second unit (E2) upon activation of the first mode (M1);
- for activating a second mode (M2) once the associated third data packet (D3) is present for each of the second data packets (D2);
the second unit (E2) for processing the first and second data packets (D1, D2) into fifth data packets (D5) from the activation of the first mode (M1), wherein the first unit (E1) delivers the fourth data packets (D4) to a data sink (EX) by the time of the activation of the first mode (M1) and after the activation of the second mode (M2), and the second unit (E2) delivers the fifth data packets (D5) to the data sink (EX) after the activation of the first mode (M1) and by the time of the activation of the second mode (M2).

4. A device (V) according to Claim 3,
having the control unit (SE), which is further configured to remove the second unit (E2) after the activation of the second mode (M2);
and having a feed unit (ZE)
- for delivering the fourth data packets (D4) to the data sink (EX) by the time of the activation of the first mode (M1) and after the activation of the second mode (M2),
- for delivering the fifth data packets (D5) to the data sink (EX) after the activation of the first mode (M1) and by the time of the activation of the second mode (M2);
wherein - in the case of the device (V) - the second unit (E2) also processes the first and second data packets with the aid of an error concealment.

5. A device (V) according to any one of the preceding claims, having the control unit (SE), which is further configured for the activation of the second mode (M2) when, for each of the second data packets (D2), the associated third data packet (D3) is present and the first unit (E1) and the second unit (E2) process the same first data packet (D1) virtually simultaneously.

6. A device (V) according to any one of the preceding claims, having the control unit (SE), comprising a memory (M) for buffering first and third data packets (D1, D3) and a sorting unit (TE) for sorting the first and third data packets (D1, D3), with the sorting unit guaranteeing a time sequence of the first and third data packets (D1, D3) for proper processing.

7. A device (V) according to any one of claims 1 to 6, wherein the data stream exhibits coded multimedia data, in particular coded video data, and
- either the first and second unit are each configured as analysis unit, in particular as image or video analysis unit, for analysing the multimedia data;
- or the first and second unit are each configured as decoding unit, in particular as video decoding unit, for decoding the coded multimedia data.

8. A method for processing data packets (D) of a data stream (S), having first data packets (D1) which represent data packets (D) that are received without error, having second data packets (D2) which represent erroneously received or missing data packets (D) and having third data packets (D3) which are received without error owing to a repeat transmission of the data packets (D) represented as second data packets (D2), with a set of the first data packets and a set of the third data packets being disjunct, wherein the following steps are carried out:
- Processing of the first and second data packets (D1, D2) into fourth data packets (D4) by a first unit (E1);
- Activation of a first mode (M1) when a second data packet (D2) is detected;
- Generating a copy of the first unit (E1) in the form of a second unit (E2) when the first mode (M1) is activated;
- Activation of a second mode (M2) once the associated third data packet (D3) is present for each of the second data packets (D2);
- Processing of the first and third data packets (D1,D3) into fifth data packets (D5) by the second unit (E2) from the activation of the first mode (M1), wherein the fourth data packets (D4) are delivered to a data sink (EX) by the time of the activation of the second mode (M2) and the fifth data packets (D5) are delivered to the data sink (EX) after the activation of the second mode (M2).

9. A method according to Claim 8, wherein the first unit (E1) is removed after the activation of the second mode (M2);
wherein a feed unit (ZE) is used to deliver the fourth data packets (D4) to the data sink (EX) by the time of the activation of the second mode (M2) and the fifth data packets (D5) to the data sink (EX) after the activation of the second mode, and
wherein the first unit (E1) processes the first and second data packets (D1, D2) with the aid of an error concealment.

10. A method for processing data packets (D) of a data stream (S), having first data packets (D1) which represent data packets (D) that are received without error, having second data packets (D2) which represent erroneously received or missing data packets (D) and having third data packets (D3) which are received without error owing to a repeat transmission of the data packets (D) represented as second data packets (D2), with a set of the first data packets and a set of the third data packets being disjunct, wherein the following steps are carried out:
- Processing of the first and third data packets (D1, D3) into fourth data packets (D4) by a first unit (E1);
- Activation of a first mode (M1) on recognition of a second data packet (D2);
- Generation of a copy of the first unit (E1) in the form of a second unit (E2) when the first mode (M1) is activated;
- Activation of a second mode (M2) once the associated third data packet (D3) is present for each of the second data packets (D2);
- Processing of the first and second data packets (D1, D2) into fifth data packets (D5) by the second unit (E2) from the time of activation of the first mode (M1), with the fourth data packets (D4) being delivered to a data sink (EX) by the time of the activation of the first mode (M1) and after the activation of the second mode (M2), and the fifth data packets (D5) being delivered to the data sink (EX) after the activation of the first mode (M1) and by the time of the activation of the second mode (M2).

11. A method according to Claim 10, in which the second unit (E2) is removed after the activation of the second mode (M2);
wherein a feed unit (ZE) is used to deliver the fourth data packets (D4) to the data sink (EX) by the time of the activation of the first mode (M1) and after the activation of the second mode (M2), and to deliver the fifth data packets (D5) to the data sink (EX) after the activation of the first mode (M1) and by the time of the activation of the second mode (M2); and
wherein the second unit (E2) processes the first and second data packets (D1, D2) with the aid of an error concealment.

12. A method according to any one of claims 8 to 11,
wherein the second mode (M2) is activated when, for each of the second data packets (D2), the associated third data packet (D3) is present and the first unit (E1) and the second unit (E2) process the same first data packet (D1) virtually simultaneously.

13. A method according to any one of claims 8 to 12,
wherein first and third data packets (D1, D3) are buffered by the second unit (E2) by means of a memory (M), and the first and third data packets (D1, D3) are sorted by means of a sorting unit (TE), wherein a time sequence of the first and third data packets (D1, D3) for proper processing is guaranteed by the sorting unit.

14. A method according to any one of claims 8 to 13,
wherein the data stream exhibits coded multimedia data, in particular coded video data, and
- either the first and second unit are each executed as analysis unit, in particular as image or video analysis unit, for analysing the multimedia data;
- or the first and second unit are each executed as decoding unit, in particular as video decoding unit, for decoding the coded multimedia data.

15. Use of a device (V) according to any one of claims 1 to 7, in which the device (V) is used for the analysis of video data as part of a monitoring apparatus (UE).

## Revendications

1. Dispositif (V) de traitement de paquets de données (D) d'un flux de données (S) avec des premiers paquets de données (D1), qui représentent des paquets de données (D) reçus sans erreur, avec des deuxièmes paquets de données (D2), qui représentent des paquets de données (D) reçus avec des erreurs ou non reçus, et avec des troisièmes paquets de données (D3), qui sont reçus sans erreur en raison d'une transmission renouvelée des paquets de données (D) représentés en tant que deuxièmes paquets de données (D2), une quantité des premiers paquets de données et une quantité des troisièmes paquets de données étant disjointes, le dispositif (V) comportant :
une première unité (E1) permettant de traiter les premiers et deuxièmes paquets de données (D1, D2) pour obtenir des quatrièmes paquets de données (D4) ;
une unité de commande (SE) permettant de :
- activer un premier mode (M1) en cas de détection d'un deuxième paquet de données (D2) ;
- générer une copie de la première unité (E1) sous la forme d'une deuxième unité (E2) lors de l'activation du premier mode (M1) ;
- activer un deuxième mode (M2), après que, pour chacun des deuxièmes paquets de données (D2), le troisième paquet de données (D3) correspondant est présent ;
la deuxième unité (E2) permettant de traiter les premiers et troisièmes paquets de données (D1, D3) pour obtenir des cinquièmes paquets de données (D5) à partir de l'activation du premier mode (M1), la première unité (E1) délivrant les quatrièmes paquets de données (D4) à un collecteur de données (EX) jusqu'à l'activation du deuxième mode (M2) et la deuxième unité (E2) délivrant les cinquièmes paquets de données (D5) au collecteur de données (EX) après l'activation du deuxième mode (M2).

2. Dispositif (V) selon la revendication 1,
comportant l'unité de commande (SE), qui est conçue en outre pour supprimer la première unité (E1) après l'activation du deuxième mode (M2) ; et une unité de distribution (ZE) permettant de
- délivrer les quatrièmes paquets de données (D4) du collecteur de données (EX) jusqu'à l'activation du deuxième mode (M2),
- délivrer les cinquièmes paquets de données (D5) du collecteur de données (EX) après l'activation du deuxième mode (M2) ;
la première unité (E1) du dispositif (V) traitant en outre les premiers et deuxièmes paquets de données à l'aide d'un masquage d'erreurs.

3. Dispositif (V) de traitement de paquets de données (D) d'un flux de données (S) avec des premiers paquets de données (D1), qui représentent des paquets de données (D) reçus sans erreur, avec des deuxièmes paquets de données (D2), qui représentent des paquets de données (D) reçus avec des erreurs ou non reçus et avec des troisièmes paquets de données (D3), qui sont reçus sans erreur en raison d'une transmission renouvelée des paquets de données (D) représentés en tant que deuxièmes paquets de données (D2), une quantité des premiers paquets de données et une quantité des troisièmes paquets de données étant disjointes, le dispositif (V) comportant :
une première unité (E1) permettant de traiter les premiers et troisièmes paquets de données (D1, D3) pour obtenir des quatrièmes paquets de données (D4) ;
une unité de commande (SE) permettant de :
- activer un premier mode (M1) en cas de détection d'un deuxième paquet de données (D2) ;
- générer une copie de la première unité (E1) sous la forme d'une deuxième unité (E2) lors de l'activation du premier mode (M1) ;
- activer un deuxième mode (M2) après que, pour chacun des deuxièmes paquets de données (D2), le troisième paquet de données correspondant (D3) est présent ;
la deuxième unité (E2) permettant de traiter les premiers et deuxièmes paquets de données (D1, D2) pour obtenir des cinquièmes paquets de données (D5) à partir de l'activation du premier mode (M1), la première unité (E1) délivrant les quatrièmes paquets de données (D4) à un collecteur de données (EX) jusqu'à l'activation du premier mode (M1) et après l'activation du deuxième mode (M2), et la deuxième unité (E2) délivrant les cinquièmes paquets de données (D5) au collecteur de données (EX) après l'activation du premier mode (M1) et jusqu'à l'activation du deuxième mode (M2).

4. Dispositif (V) selon la revendication 3, comportant l'unité de commande (SE), qui est conçue en outre pour supprimer la deuxième unité (E2) après l'activation du deuxième mode (M2) ; et
une unité de distribution (ZE) permettant de
- délivrer les quatrièmes paquets de données (D4) au collecteur de données (EX) jusqu'à l'activation du premier mode (M1) et après l'activation du deuxième mode (M2),
- délivrer les cinquièmes paquets de données (D5) au collecteur de données (EX) après l'activation du premier mode (M1) et jusqu'à l'activation du deuxième mode (M2) ;
la deuxième unité (E2) du dispositif (V) traitant en outre les premiers et deuxièmes paquets de données à l'aide d'un masquage d'erreurs.

5. Dispositif (V) selon l'une quelconque des revendications précédentes, comportant l'unité de commande (SE), qui est formée en outre pour activer le deuxième mode (M2) après que, pour chacun des deuxièmes paquets de données (D2), le troisième paquet de données correspondant (D3) est présent, la première unité (E1) et la deuxième unité (E2) traitant pratiquement simultanément le même premier paquet de données (D1).

6. Dispositif (V) selon l'une quelconque des revendications précédentes, comportant l'unité de commande (SE) qui comprend une mémoire (M) permettant de stocker provisoirement des premiers et troisièmes paquets de données (D1, D3) et une unité de tri (TE) permettant de trier les premiers et troisièmes paquets de données (D1, D3), l'unité de tri garantissant une suite temporelle des premiers et troisièmes paquets de données (D1, D3) afin de les traiter correctement.

7. Dispositif (V) selon l'une des revendications 1 à 6, avec lequel le flux de données comporte des données multimédias codées, en particulier des données vidéo codées, et
- soit la première et la deuxième unité sont conçues chacune en tant qu'unité d'analyse, en particulier en tant qu'unité d'analyse d'image ou de vidéo, permettant d'analyser les données multimédias ;
- soit la première et la deuxième unité sont conçues chacune en tant qu'unité de décodage, en particulier en tant qu'unité de décodage vidéo, permettant de décoder les données multimédias codées.

8. Procédé de traitement de paquets de données (D) d'un flux de données (S) avec des premiers paquets de données (D1), qui représentent des paquets de données (D) reçus sans erreurs, avec des deuxièmes paquets de données (D2), qui représentent des paquets de données (D) reçus avec des erreurs ou manquants, et avec des troisièmes paquets de données (D3), qui sont reçus sans erreur en raison d'une transmission renouvelée des paquets de données (D) représentés en tant que deuxièmes paquets de données (D2), une quantité des premiers paquets de données et une quantité des troisièmes paquets de données étant disjointes, comportant l'exécution des étapes suivantes consistant à :
- traiter les premiers et deuxièmes paquets de données (D1, D2) pour obtenir des quatrièmes paquets de données (D4) par une première unité (E1) ;
- activer un premier mode (M1) en cas de détection d'un deuxième paquet de données (D2) ;
- générer une copie de la première unité (E1) sous la forme d'une deuxième unité (E2) lors de l'activation du premier mode (M1) ;
- activer un deuxième mode (M2), après que, pour chacun des deuxièmes paquets de données (D2), le troisième paquet de données correspondant (D3) est présent ;
- traiter les premiers et troisièmes paquets de données (D1, D3) afin d'obtenir des cinquièmes paquets de données (D5) par la deuxième unité (E2) à partir de l'activation du premier mode (M1), les quatrièmes paquets de données (D4) étant délivrés à un collecteur de données (EX) jusqu'à l'activation du deuxième mode (M2) et les cinquièmes paquets de données (D5) étant délivrés au collecteur de données (EX) après l'activation du deuxième mode (M2).

9. Procédé selon la revendication 8,
dans lequel la première unité (E1) est supprimée après l'activation du deuxième mode (M2) ;
dans lequel une unité de distribution (ZE) délivre les quatrièmes paquets de données (D4) au collecteur de données (EX) jusqu'à l'activation du deuxième mode (M2) et délivre les cinquièmes paquets de données (D5) au collecteur de données (EX) après l'activation du deuxième mode (M2) ; et
dans lequel les premiers et les deuxièmes paquets de données (D1, D2) sont traités en outre par la première unité (E1) à l'aide d'un masquage d'erreurs.

10. Procédé de traitement de paquets de données (D) d'un flux de données (S) avec des premiers paquets de données (D1), qui représentent des paquets de données (D) reçus sans erreur, avec des deuxièmes paquets de données (D2), qui représentent des paquets de données (D) reçus avec des erreurs ou manquants, et avec des troisièmes paquets de données (D3), qui sont reçus sans erreur en raison d'une transmission renouvelée des paquets de données (D) représentés en tant que deuxièmes paquets de données (D2), une quantité des premiers paquets de données et une quantité des troisièmes paquets de données étant disjointes, comportant l'exécution des étapes suivantes consistant à :
- traiter les premiers et troisièmes paquets de données (D1, D3) pour obtenir des quatrièmes paquets de données (D4) par une première unité (E1) ;
- activer un premier mode (M1) en cas de détection d'un deuxième paquet de données (D2) ;
- générer une copie de la première unité (E1) sous la forme d'une deuxième unité (E2) lors de l'activation du premier mode (M1) ;
- activer un deuxième mode (M2), après que, pour chacun des deuxièmes paquets de données (D2), le troisième paquet de données correspondant (D3) est présent ;
- traiter par la deuxième unité (E2) les premiers et les deuxièmes paquets de données (D1, D2) pour obtenir des cinquièmes paquets de données (D5) à partir de l'activation du premier mode (M1), les quatrièmes paquets de données étant délivrés à un collecteur de données (EX) jusqu'à l'activation du premier mode (M1) et après l'activation du deuxième mode (M2) et les cinquièmes paquets de données étant délivrés au collecteur de données (EX) après l'activation du premier mode (M1) et jusqu'à l'activation du deuxième mode (M2).

11. Procédé selon la revendication 10,
dans lequel la deuxième unité (E2) est supprimée après l'activation du deuxième mode (M2) ;
dans lequel, avec une unité de distribution (ZE), les quatrièmes paquets de données (D4) sont délivrés au collecteur de données (EX) jusqu'à l'activation du premier mode (M1) et après l'activation du deuxième mode (M2), et les cinquièmes paquets de données (D5) sont délivrés au collecteur de données (EX) après l'activation du premier mode (M1) et jusqu'à l'activation du deuxième mode (M2) ; et
dans lequel la deuxième unité (E2) traite en outre les premiers et les deuxièmes paquets de données (D1, D2) à l'aide d'un masquage d'erreurs.

12. Procédé selon l'une des revendications 8 à 11,
dans lequel le deuxième mode (M2) est activé après que, pour chacun des deuxièmes paquets de données (D2), le troisième paquet de données correspondant (D3) est présent et la première unité (E1) et la deuxième unité (E2) traitent à peu près simultanément le même premier paquet de données (D1).

13. Procédé selon l'une des revendications 8 à 12,
dans lequel la deuxième unité (E2) stocke provisoirement à l'aide d'une mémoire (M) des premiers et des troisièmes paquets de données (D1, D3) et une unité de tri (TE) trie les premiers et les troisièmes paquets de données (D1, D3), l'unité de tri garantissant une suite temporelle des premiers et troisièmes paquets de données (D1, D3) pour les traiter correctement.

14. Procédé selon l'une des revendications 8 à 13,
dans lequel, le flux de données comporte des données multimédias codées, en particulier des données vidéo codées, et
- soit la première et la deuxième unité sont conçues chacune en tant qu'unité d'analyse, en particulier en tant qu'unité d'analyse d'image ou de vidéo, permettant d'analyser les données multimédias ;
- soit la première et la deuxième unité sont conçues chacune en tant qu'unité de décodage, en particulier en tant qu'unité de décodage vidéo, permettant de décoder les données multimédias codées.

15. Utilisation d'un dispositif (V) selon l'une des revendications 1 à 7, dans laquelle le dispositif (V) est mis en oeuvre pour analyser des données vidéo dans le cadre d'un système de surveillance (UE).
